# EUROPÄISCHE PATENTSCHRIFT

(11) **EP 3 936 379 B1**
(45) Veröffentlichungstag und Bekanntmachung des Hinweises auf die Patenterteilung: **31.08.2022**
(21) Anmeldenummer: 21182489.1
(22) Anmeldetag: 29.06.2021
(51) Int. Cl.: B60N 3/16, B60P 3/36

(54) **KÜCHENANORDNUNG**
KITCHEN ARRANGEMENT
AGENCEMENT DE CUISINE

(30) Priorität: 06.07.2020 DE 102020117797
(43) Veröffentlichungstag der Anmeldung: 12.01.2022
(73) Patentinhaber: Pössl Freizeit und Sport GmbH, 83404 Ainring (DE)
(72) Erfinder: WAHL, Markus, 83404 Ainring (DE)
(74) Vertreter: Hoefer & Partner Patentanwälte mbB

(56) Entgegenhaltungen:
- DE-A1- 4 443 994
- DE-U1-202018 106 657

## Beschreibung

Die Erfindung betrifft eine Küchenanordnung für ein Fahrzeug.

Bekannt sind Reisemobile mit intergierten Küchenblöcken. In der Regel sind die Küchenblöcke im Innenraum des Fahrzeugs angeordnet und nutzbar.

DE 44 43 994 A1 zeigt nach dem Oberbegriff des Anspruchs 1 einen Küchenblock an einem Fahrzeug. Der Küchenblock ist aus dem Fahrzeug ausschwenkbar und sowohl innerhalb des Fahrzeugs als auch außerhalb des Fahrzeugs absenkbar.

DE 20 2018 106 657 U1 offenbart einen Kücheneinbau für eine Kombilimousine oder Großraumlimousine, wobei im Fahrgastraum oder Gepäckraum ein Einbau mit einem Auszug vorhanden ist, der eine Küchenzeile mit Küchenelementen trägt. Der Auszug ist aus dem Einbau durch einen Türausschnitt einer geöffneten Tür der Limousine ziehbar. Das Küchenelement ist auf dem Auszug zwischen einer niedrigen und einer hohen Lage höhenverstellbar.

Es ist Aufgabe der Erfindung eine Küchenanordnung für ein Fahrzeug anzugeben, die flexibel nutzbar ist.

Die Lösung dieser Aufgabe erfolgt durch die Merkmale des unabhängigen Anspruchs. Die abhängigen Ansprüche haben bevorzugte Ausgestaltungen der Erfindung zum Gegenstand.

Die Erfindung zeigt eine Küchenanordnung für ein Fahrzeug. Bei dem Fahrzeug handelt es sich vorzugsweise um ein Reisemobil. Das Reisemobil kann auch als Freizeitmobil, Wohnmobil, Wohnwagen, Wohnanhänger usw. bezeichnet werden.

An der Küchenanordnung sind jeweils zueinander senkrecht eine Längsachse, eine Querachse und eine Hochachse definiert. Bei einer Anordnung der Küchenanordnung an einer seitlichen Türöffnung des Fahrzeugs, entspricht vorzugsweise die Längsachse einer Fahrzeuglängsachse, die Querachse einer Fahrzeugquerachse und die Hochachse einer Fahrzeughochachse. Bei einer Anordnung der Küchenanordnung an einer hinteren Türöffnung bzw. am Heck des Fahrzeugs, entspricht vorzugsweise die Längsachse einer Fahrzeugquerachse, die Querachse einer Fahrzeuglängsachse und die Hochachse einer Fahrzeughochachse.

Richtungsbeschreibungen, z.B. Querrichtung, Hochrichtung und Längsrichtung, beziehen sich auf Bewegungen parallel zur zugehörigen Achse. Die Bewegungen können dabei linear oder bogenförmig erfolgen und müssen lediglich einen Vektor in der beschriebenen Richtung aufweisen.

Die Küchenanordnung umfasst einen Küchenblock, vorzugsweise mit Spülbecken und/oder Herd und/oder Stauraum und/oder Frischwassertank und/oder Schmutzwassertank und/oder Gasflaschenaufnahme. Insbesondere hat der Küchenblock zumindest eine Vorderseite an der die Stauräume, z.B. Schubladen und/oder Fächer, zugänglich sind.

Die Küchenanordnung umfasst ein im Fahrzeug befestigbares Gestell, wobei der Küchenblock über das Gestell beweglich an dem Fahrzeug befestigbar ist. Das Gestell ist zum Bewegen des Küchenblocks zwischen einer Innenposition und einer Außenposition ausgebildet. Der Küchenblock befindet sich in der Innenposition im Fahrzeuginnenraum und ist durch eine im Fahrzeuginnenraum befindliche Person nutzbar; insbesondere weist dabei die Vorderseite in den Fahrzeuginnenraum. Der Küchenblock befindet sich in der Außenposition vollständig außerhalb des Fahrzeugs und ist durch eine neben dem Fahrzeug befindliche Person nutzbar; insbesondere weist dabei die Vorderseite vom Fahrzeug weg und steht parallel zur Fahrzeuglängsrichtung oder die Vorderseite steht parallel zur Fahrzeugquerrichtung.

Das Gestell ist dazu ausgebildet, zum Bewegen des Küchenblocks in die Außenposition, den Küchenblock in Querrichtung aus dem Fahrzeug und in Hochrichtung nach unten zu bewegen. In Gegenrichtung ist das Gestell dazu ausgebildet, zum Bewegen des Küchenblocks in die Innenposition, den Küchenblock in Hochrichtung nach oben und in Querrichtung in das Fahrzeug zu bewegen.

Vorzugsweise umfasst das Gestell ein erstes Tragelement, das am Fahrzeug, vorzugsweise zumindest teilweise in einer Trittstufe des Fahrzeugs, befestigbar ist.

Das Gestell umfasst ein Drehlager, vorzugsweise am ersten Tragelement, sodass der Küchenblock um die Hochachse drehbar ist. Die Achse des Drehlagers wird als Schwenkachse bezeichnet. Insbesondere ermöglicht das Drehlager eine Drehung um 90°. Die Schwenkachse schneidet den Küchenblock möglichst weit außermittig, sodass ein Großteil des Küchenblocks oder der vollständige Küchenblock nach außen drehbar ist.

Das Gestell umfasst ein zweites Tragelement, das über das Drehlager um die Schwenkachse drehbar ist. Die beiden Tragelemente sind somit über das Drehlager miteinander verbunden. Der Küchenblock ist am zweiten Tragelement angeordnet.

Vorzugsweise ist das zweite Tragelement in Querrichtung längenverstellbar, vorzugsweise teleskopierbar. Dadurch kann der Küchenblock nach dem Drehen um die Schwenkachse (Drehlager) in Querrichtung vom Fahrzeug wegbewegt werden.

Der Küchenblock ist am zweiten Tragelement höhenverstellbar angeordnet. Die Höhenverstellung erfolgt parallel zu Hochachse; ist aber mit einer weiteren Bewegung in anderer Richtung überlagert.

Der Küchenblock ist über eine Verstellvorrichtung am zweiten Tragelement höhenverstellbar befestigt ist.

Die Verstellvorrichtung umfasst einen Ausleger und eine Führung, wobei der Ausleger um eine erste Drehachse drehbar am zweiten Tagelement angeordnet ist, wobei der Ausleger um eine zweite Drehachse drehbar am Küchenblock angeordnet ist, wobei die Führung um eine dritte Drehachse drehbar am zweiten Tagelement angeordnet ist, wobei die Führung um eine vierte Drehachse drehbar am Küchenblock angeordnet ist, und wobei die vier Drehachsen versetzt zueinander sind und horizontal stehen.

Vorzugsweise ist die erste Drehachse bei Innenposition des Küchenblocks unter dem Küchenblock angeordnet. Insbesondere weist der Ausleger hierzu einen 90° Knick auf und erstreckt sich unter den Küchenblock.

Vorzugsweise ist der Küchenblock mittels der Verstellvorrichtung gleichzeitig in Querrichtung und in Hochrichtung bewegbar ist. Dadurch kann der Küchenblock mittels der Verstellvorrichtung gleichzeitig vom Fahrzeug weg und nach unten bewegt werden. Nach der Drehung um die Schwenkachse stehen die vier Achsen der Verstellvorrichtung vorzugsweise parallel zur Längsachse.

Alternativ ist der Küchenblock mittels der Verstellvorrichtung gleichzeitig in Längsrichtung und in Hochrichtung bewegbar ist. Diese Variante ist vorzugsweise mit dem längenverstellbaren zweiten Tragelement zu kombinieren. Nach der Drehung um die Schwenkachse stehen die vier Achsen der Verstellvorrichtung vorzugsweise parallel zur Querachse.

Vorzugsweise ist zwischen zweitem Tragelement und Küchenblock zumindest ein Energiespeicher, vorzugsweise eine Gasdruckfeder, angeordnet, wobei der Energiespeicher beim Absenken des Küchenblocks aufladbar und beim Anheben des Küchenblocks entladbar ist.

Die Erfindung umfasst vorzugsweise ein Fahrzeug, insbesondere Reisemobil, umfassend die beschriebene Küchenanordnung, wobei die Küchenanordnung an einer Türöffnung, vorzugsweise einer seitlichen Türöffnung, des Fahrzeugs angeordnet ist.

Bei dem Fahrzeug gemäß einer ersten Variante ist der Küchenblock zur Bewegung in die Außenposition 90° um die zur Hochachse parallele Schwenkachse nach außen drehbar und daraufhin mittels der Verstellvorrichtung gleichzeitig in Querrichtung vom Fahrzeug weg und in Hochrichtung nach unten bewegbar.

Bei dem Fahrzeug gemäß einer weiteren Variante ist der Küchenblock von zwei gegenüberliegenden Seiten verwendbar. Entsprechend weist der Küchenblock zwei gegenüberliegenden Vorderseiten auf. Die Staufächer sind von beiden Vorderseiten zugänglich. Der Küchenblock ist zur Bewegung in die Außenposition über die Verstellvorrichtung, ohne vorheriges Drehen des Küchenblocks, gleichzeitig in Querrichtung vom Fahrzeug weg und in Hochrichtung nach unten bewegbar. Zusätzlich ist bevorzugt vorgesehen, dass der Küchenblock zur Freigabe der Türöffnung (ohne Verstellen in die Außenposition) um die zur Hochachse parallele Schwenkachse drehbar ist.

Bei dem Fahrzeug gemäß einer weiteren Variante ist der Küchenblock zur Bewegung in die Außenposition 180° um eine zur Hochachse parallele Mittelachse drehbar und daraufhin mittels der Verstellvorrichtung gleichzeitig in Querrichtung vom Fahrzeug weg und in Hochrichtung nach unten bewegbar ist. Die Mittelachse ist möglich mittig zum Küchenblock angeordnet, sodass der Küchenblock auf möglichst geringer Fläche um 180° drehbar ist. Vorzugsweise ist der Küchenbloch zur Freigabe der Türöffnung um die zur Hochachse parallele Schwenkachse drehbar ist. Ferner vorzugsweise ist der Küchenblock nach dem Drehen um die Schwenkachse in eine Zwischenposition, insbesondere auf Höhe der Trittstufe, absenkbar; wobei dies vorzugsweise mittels der Verstellvorrichtung durch gleichzeitige Bewegung in Hochrichtung nach unten und in Längsrichtung ausführbar ist.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1a bis 1c: ein erfindungsgemäßes Fahrzeug mit erfindungsgemäßer Küchenanordnung gemäß einem ersten Ausführungsbeispiel,
- Fig. 2: eine Draufsicht der erfindungsgemäßen Küchenanordnung gemäß dem ersten Ausführungsbeispiel in Außenposition,
- Fig. 3: eine Ansicht der erfindungsgemäßen Küchenanordnung gemäß dem ersten Ausführungsbeispiel in Innenposition,
- Fig. 4 bis 6: Ansichten eines Gestells der erfindungsgemäßen Küchenanordnung gemäß dem ersten Ausführungsbeispiel in Innenposition,
- Fig. 7a bis 7e: ein erfindungsgemäßes Fahrzeug mit erfindungsgemäßer Küchenanordnung gemäß einem zweiten Ausführungsbeispiel,
- Fig. 8a bis 8f: ein erfindungsgemäßes Fahrzeug mit erfindungsgemäßer Küchenanordnung gemäß einem dritten Ausführungsbeispiel, und
- Fig. 9a bis 9f: ein erfindungsgemäßes Fahrzeug mit erfindungsgemäßer Küchenanordnung gemäß einem vierten Ausführungsbeispiel.

Im Folgenden werden Ausführungsbeispiele der Erfindung beschrieben. Gleiche bzw. funktional gleiche Bauteile sind mit denselben Bezugszeichen versehen.

Die Ausführungsbeispiele zeigen ein Fahrzeug 100, ausgebildet als Reisemobil, mit einer seitlichen Türöffnung 101 mit Trittstufe 102. Der Übersichtlichkeit halber ist vom Fahrzeug 100 lediglich der Boden der Karosserie dargestellt.

In jedem Ausführungsbeispiel umfasst das Fahrzeug 100 eine Küchenanordnung 1. Die Küchenanordnung 1 umfasst einen Küchenblock 2, vorzugsweise mit Arbeitsplatte 3 samt Spülbecken und/oder Herd. Insbesondere hat der Küchenblock 2 eine Vorderseite 5 an der Stauräume 4, z.B. Schubladen und/oder Fächer, zugänglich sind.

Die Küchenanordnung 1 umfasst ein im Fahrzeug 100 befestigbares Gestell 6, wobei der Küchenblock 2 über das Gestell 6 beweglich an dem Fahrzeug 100 befestigt ist. Das Gestell 6 ist zum Bewegen des Küchenblocks 2 zwischen einer Innenposition und einer Außenposition ausgebildet ist. Der Küchenblock 2 befindet sich in der Innenposition im Fahrzeuginnenraum und ist durch eine im Fahrzeuginnenraum befindliche Person nutzbar; insbesondere weist dabei die Vorderseite 5 in den Fahrzeuginnenraum. Der Küchenblock 2 befindet sich in der Außenposition vollständig außerhalb des Fahrzeugs 100 und ist durch eine neben dem Fahrzeug 100 befindliche Person nutzbar; insbesondere weist dabei die Vorderseite 5 vom Fahrzeug 100 weg und steht parallel zur Fahrzeuglängsrichtung oder die Vorderseite 5 steht parallel zur Fahrzeugquerrichtung.

Das Gestell 6 ist dazu ausgebildet, zum Bewegen des Küchenblocks 2 in die Außenposition, den Küchenblock 2 in Querrichtung aus dem Fahrzeug und in Hochrichtung nach unten zu bewegen. In Gegenrichtung ist das Gestell 6 dazu ausgebildet, zum Bewegen des Küchenblocks 2 in die Innenposition, den Küchenblock 2 in Hochrichtung nach oben und in Querrichtung in das Fahrzeug 100 zu bewegen.

An der Küchenanordnung 1 sind jeweils zueinander senkrecht eine Längsachse 31, eine Querachse 32 und eine Hochachse 30 definiert. Bei der Anordnung der Küchenanordnung 1 gemäß allen Ausführungsbeispielen an der seitlichen Türöffnung 101 des Fahrzeugs 100, entspricht die Längsachse 31 einer Fahrzeuglängsachse, die Querachse 32 einer Fahrzeugquerachse und die Hochachse 30 einer Fahrzeughochachse.

Das Gestell 6 umfasst ein erstes Tragelement 7, das am Fahrzeug 100 teilweise in der Trittstufe 102 des Fahrzeugs befestigt ist.

Das Gestell 6 umfasst ein Drehlager 9 am ersten Tragelement 7, sodass der Küchenblock 2 um eine zur Hochachse 30 parallele Schwenkachse 40 drehbar ist. Das Drehlager ermöglicht eine Drehung um 90°. Die Schwenkachse 40 schneidet den Küchenblock 2 möglichst weit außermittig, sodass ein Großteil des Küchenblocks 2 oder der vollständige Küchenblock 2 nach außen drehbar ist.

Das Gestell 6 umfasst ein zweites Tragelement 8, das über das Drehlager 9 um die Schwenkachse 40 drehbar ist. Die beiden Tragelemente 7, 8 sind somit über das Drehlager 9 miteinander verbunden. Der Küchenblock 2 ist am zweiten Tragelement 8 angeordnet.

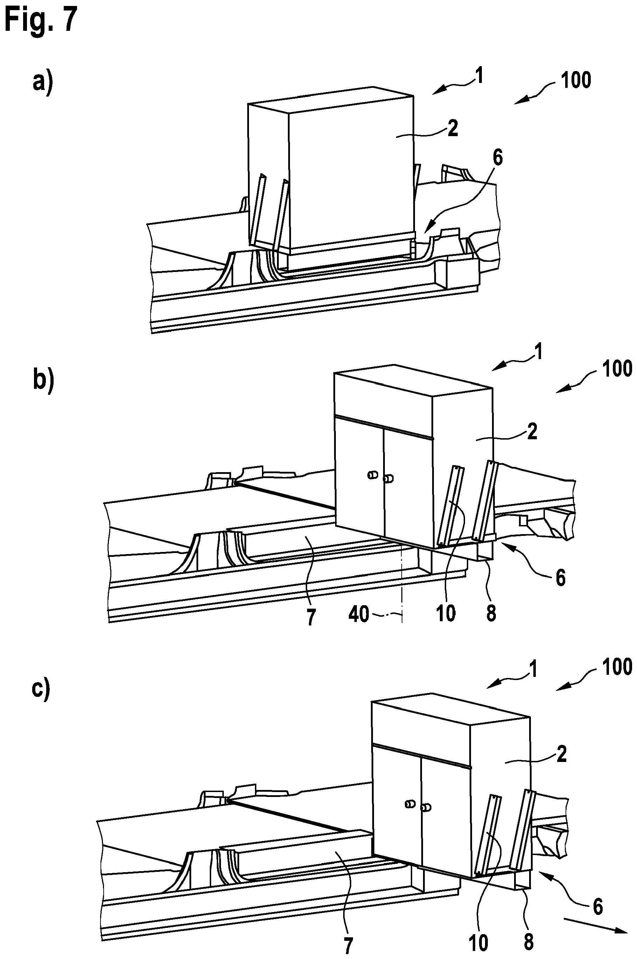

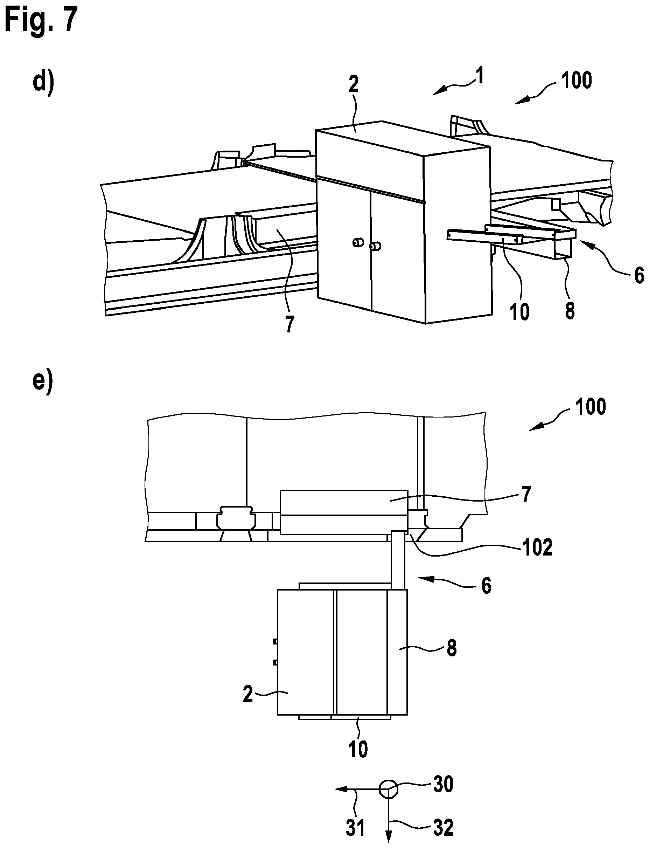

Im zweiten Ausführungsbeispiel (Fig. 7) ist das zweite Tragelement 8 in Querrichtung längenverstellbar, vorzugsweise teleskopierbar. Dadurch kann der Küchenblock 2 nach dem Drehen um die Schwenkachse 40 in Querrichtung vom Fahrzeug 100 wegbewegt werden.

Der Küchenblock 2 ist in allen Ausführungsbeispielen am zweiten Tragelement 8 höhenverstellbar angeordnet. Die Höhenverstellung erfolgt bogenförmig mit einem Vektor parallel zu Hochachse 30; ist durch die Bogenform aber mit einer weiteren Bewegung in anderer Richtung überlagert.

Der Küchenblock 2 ist über eine Verstellvorrichtung 10 am zweiten Tragelement 8 höhenverstellbar befestigt.

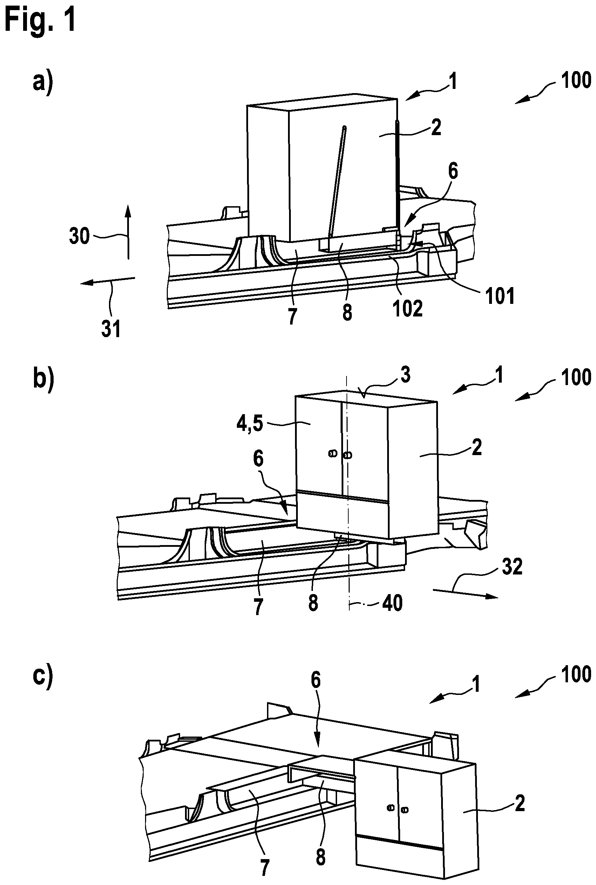

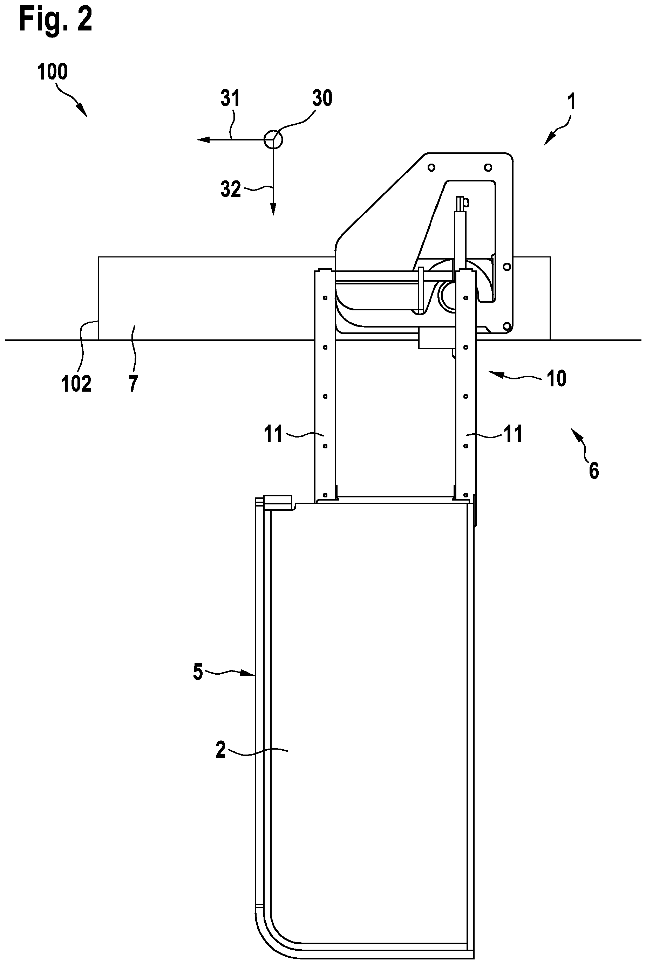

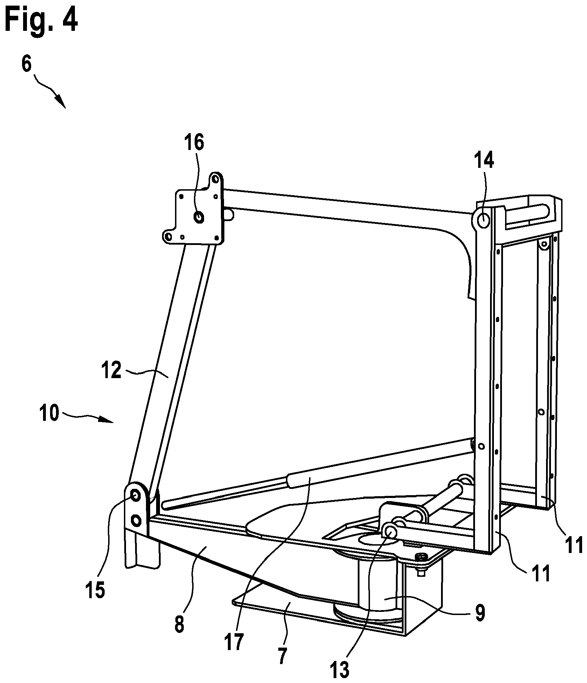

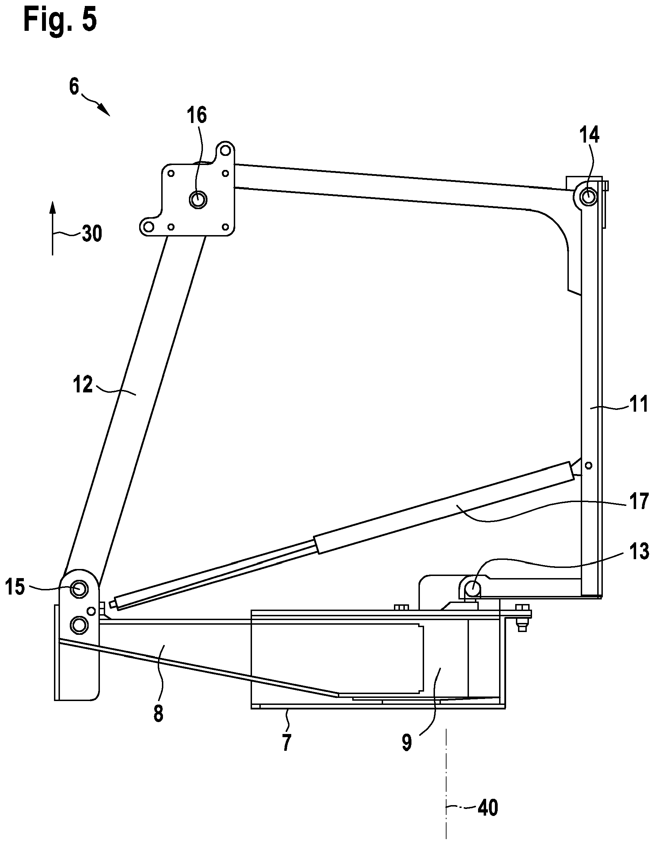

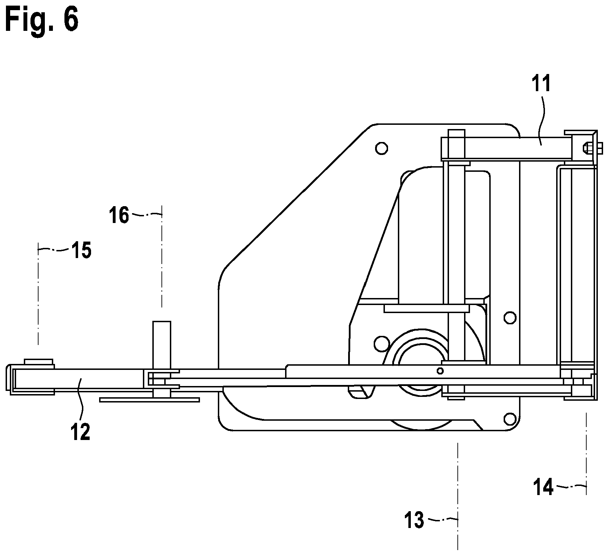

Der Aufbau der Verstellvorrichtung 10 wird anhand des ersten Ausführungsbeispiels (Fig. 1 bis 6) stellvertretend für alle Ausführungsbeispiele beschrieben:
Die Verstellvorrichtung 10 umfasst einen Ausleger 11 und eine Führung 12, wobei der Ausleger 11 um eine erste Drehachse 13 drehbar am zweiten Tagelement 8 angeordnet ist, wobei der Ausleger 11 um eine zweite Drehachse 14 drehbar am Küchenblock 2 angeordnet ist, wobei die Führung 12 um eine dritte Drehachse 15 drehbar am zweiten Tagelement 8 angeordnet ist, wobei die Führung 12 um eine vierte Drehachse 16 drehbar am Küchenblock 2 angeordnet ist, und wobei die vier Drehachsen 13 - 16 versetzt zueinander sind und horizontal stehen.

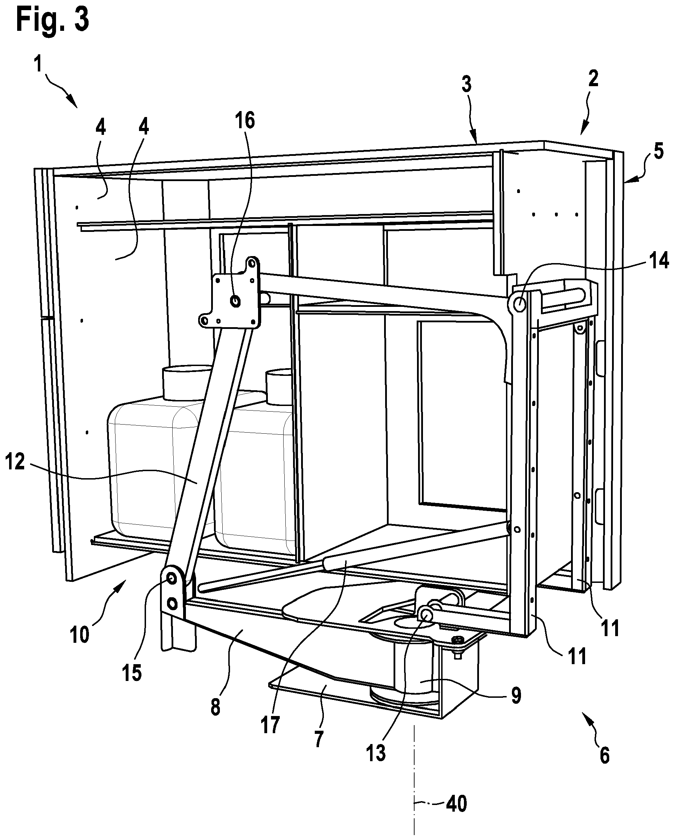

Die erste Drehachse 13 ist bei Innenposition (Fig. 3 bis 6) des Küchenblocks 2 unter dem Küchenblock 2 angeordnet. Der Ausleger weist hierzu einen 90° Knick auf und erstreckt sich unter den Küchenblock 2.

Zwischen dem Ausleger 11 und dem zweiten Tragelement 7 bzw. der Führung 12 ist ein Energiespeicher 17 angeordnet, wobei der Energiespeicher 17 beim Absenken des Küchenblocks 2 aufladbar und beim Anheben des Küchenblocks 2 entladbar ist.

Im ersten Ausführungsbeispiel (s. Fig. 1) ist der Küchenblock 1 mittels der Verstellvorrichtung 10 gleichzeitig in Querrichtung und in Hochrichtung bewegbar ist. Dadurch kann der Küchenblock 2 mittels der Verstellvorrichtung 10 gleichzeitig vom Fahrzeug 100 weg und nach unten bewegt werden. Nach der Drehung um die Schwenkachse 40 stehen die vier Drehachsen 13 - 16 der Verstellvorrichtung 10 parallel zur Längsachse 31.

Im zweiten Ausführungsbeispiel (s. Fig. 7) ist der Küchenblock 1 mittels der Verstellvorrichtung 10 gleichzeitig in Längsrichtung und in Hochrichtung bewegbar ist. Das zweite Tragelement 8 ist längenverstellbar. Nach der Drehung um die Schwenkachse 40 stehen die vier Drehachsen 13 - 16 der Verstellvorrichtung 10 parallel zur Querachse 32.

Bei dem Fahrzeug 100 gemäß dem ersten Ausführungsbeispiel ist der Küchenblock 2 zur Bewegung in die Außenposition 90° um die Schwenkachse 40 nach außen drehbar (s. Fig. 1a und 1b) und daraufhin mittels der Verstellvorrichtung 10 gleichzeitig in Querrichtung vom Fahrzeug 100 weg und in Hochrichtung nach unten bewegbar (s. Fig. 1c).

Bei dem Fahrzeug 100 gemäß dem zweiten Ausführungsbeispiel ist der Küchenblock 2 zur Bewegung in die Außenposition 90° um die Schwenkachse 40 nach außen drehbar (s. Fig. 7a und 7b) und daraufhin in Querrichtung vom Fahrzeug 100 weg linearverschiebbar (s. Fig. 7c) und daraufhin in Hochrichtung nach unten bewegbar (s. Fig. 7d); wobei mittels der Verstellvorrichtung 10 gleichzeitig die Bewegung in Hochrichtung nach unten und die Bewegung in Längsrichtung ausführbar ist. Fig. 7e zeigt den Küchenblock 2 in der Außenposition in Draufsicht.

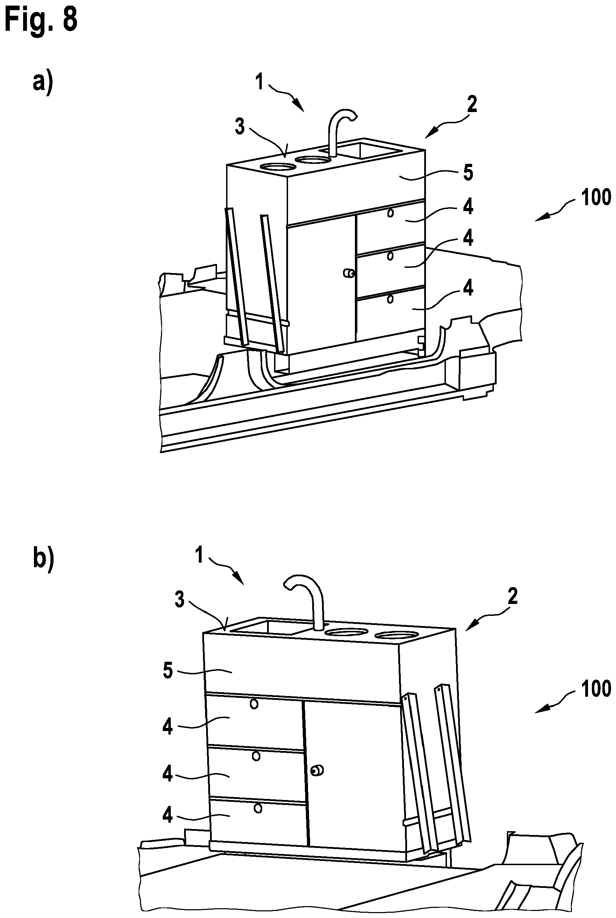

Bei dem Fahrzeug 100 gemäß dem dritten Ausführungsbeispiel ist der Küchenblock 2 von zwei gegenüberliegenden Seiten verwendbar ist. Entsprechend weist der Küchenblock 2 zwei gegenüberliegenden Vorderseiten 5 auf. Die Staufächer 4 sind von beiden Vorderseiten 5 zugänglich. Fig. 8a zeigt die nach außen gerichtete Vorderseite 5. Fig. 8b zeigt die nach innen gerichtete Vorderseite 5.

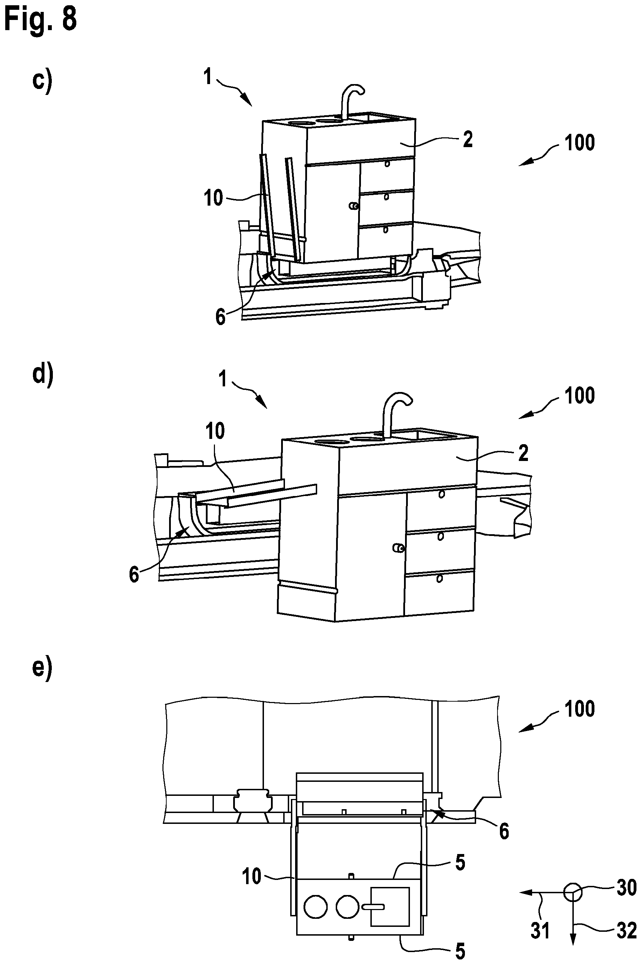

Der Küchenblock 2 ist zur Bewegung in die Außenposition über die Verstellvorrichtung 10, ohne vorheriges Drehen des Küchenblocks 2, gleichzeitig in Querrichtung vom Fahrzeug weg und in Hochrichtung nach unten bewegbar (s. Fig. 8c und 8d). Fig. 8e zeigt den Küchenblock 2 in der Außenposition in Draufsicht.

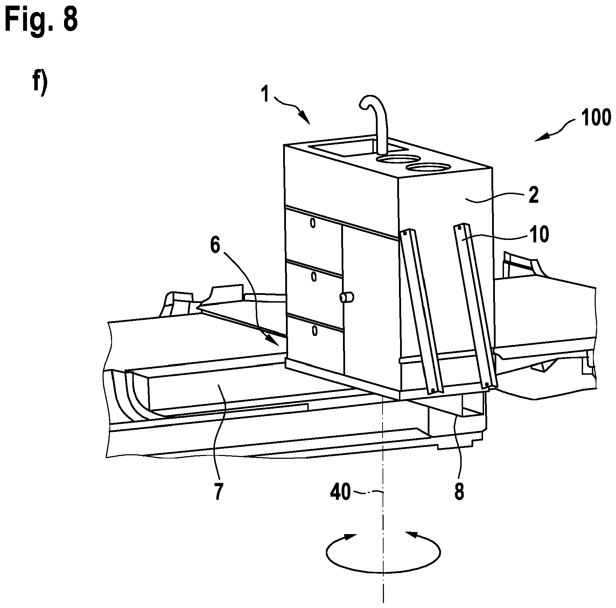

Zusätzlich ist vorgesehen, dass der Küchenblock 2 zur Freigabe der Türöffnung 101 um die zur Hochachse 30 parallele Schwenkachse 40 drehbar ist (s. Fig. 8f).

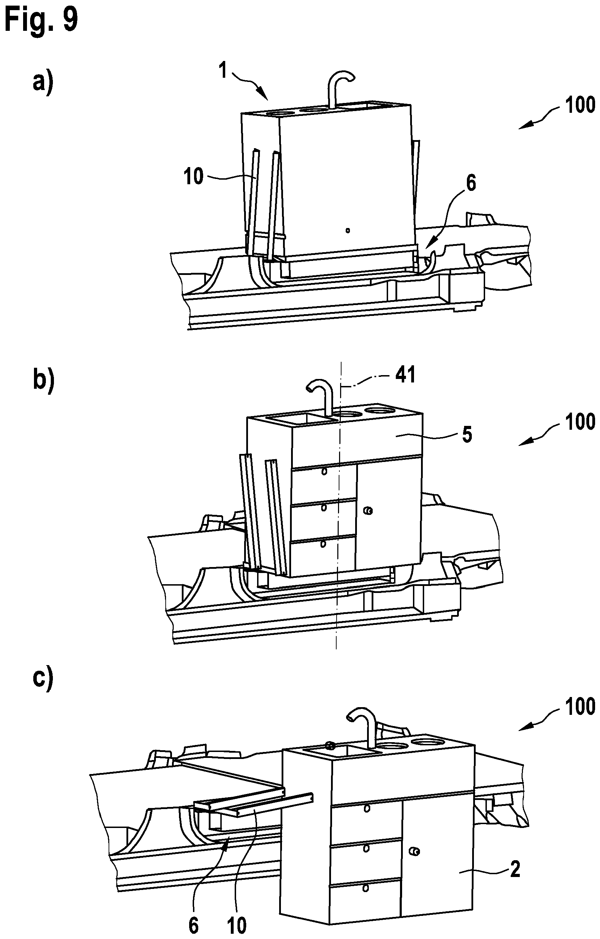

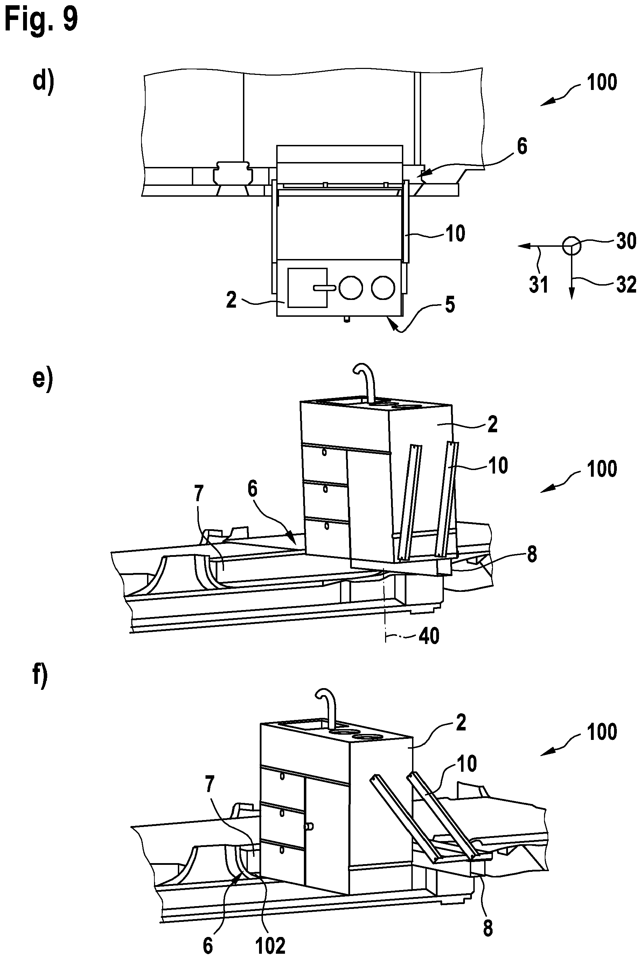

Bei dem Fahrzeug 100 gemäß dem vierten Ausführungsbeispiel ist der Küchenblock 2 zur Bewegung in die Außenposition 180° um eine zur Hochachse 30 parallele Mittelachse 41 drehbar (s. Fig. 9a und 9b) und daraufhin mittels der Verstellvorrichtung 10 gleichzeitig in Querrichtung vom Fahrzeug 100 weg und in Hochrichtung nach unten bewegbar (s. Fig. 9b und 9c). Die Mittelachse 41 ist möglich mittig zum Küchenblock 2 angeordnet, sodass der Küchenblock 2 auf möglichst geringer Fläche um 180° drehbar ist.

Der Küchenbloch 2 ist zur Freigabe der Türöffnung 101 um die Schwenkachse 40 drehbar (s. Fig. 9e). Ferner ist der Küchenblock 2 nach dem Drehen um die Schwenkachse 40 in eine Zwischenposition (s. Fig. 9f), insbesondere auf Höhe der Trittstufe 102, absenkbar; wobei dies mittels der Verstellvorrichtung 10 durch gleichzeitige Bewegung in Hochrichtung nach unten und in Längsrichtung ausführbar ist.

Neben der vorstehenden schriftlichen Beschreibung der Erfindung wird zu deren ergänzender Offenbarung hiermit explizit auf die zeichnerische Darstellung der Erfindung in allen Figuren Bezug genommen.

### Bezugszeichenliste

- 1: Küchenanordnung
- 2: Küchenblock
- 3: Arbeitsfläche mit Spüle und/oder Herd
- 4: Staufächer
- 5: Vorderseite
- 6: Gestell
- 7: erstes Tragelement
- 8: zweites Tragelement
- 9: Drehlager
- 10: Verstellvorrichtung
- 11: Ausleger
- 12: Führung
- 13: erste Drehachse
- 14: zweite Drehachse
- 15: dritte Drehachse
- 16: vierte Drehachse
- 17: Energiespeicher
- 30: Hochachse
- 31: Längsachse
- 32: Querachse
- 40: Schwenkachse
- 41: Mittelachse
- 100: Fahrzeug
- 101: Türöffnung
- 102: Trittstufe

## Patentansprüche

1. Küchenanordnung (1) für ein Fahrzeug (100), umfassend
• einen Küchenblock (2),
• und ein im Fahrzeug (100) befestigbares Gestell (6),
• wobei an der Küchenanordnung (1) jeweils zueinander senkrecht eine Längsachse (31), eine Querachse (32) und eine Hochachse (30) definiert sind,
• wobei der Küchenblock (2) über das Gestell (6) beweglich an dem Fahrzeug (100) befestigbar ist,
• wobei das Gestell (6) zum Bewegen des Küchenblocks (2) zwischen einer Innenposition und einer Außenposition ausgebildet ist,
• wobei das Gestell (6) ein Drehlager (9) umfasst, sodass der Küchenblock (2) um eine zur Hochachse (30) parallele Schwenkachse (40) drehbar ist,
• wobei das Gestell (6) ein zweites Tragelement (8) umfasst, das über das Drehlager (9) um die Schwenkachse (40) drehbar ist,
• wobei der Küchenblock (2) über eine Verstellvorrichtung (10) am zweiten Tragelement (8) höhenverstellbar befestigt ist,
**dadurch gekennzeichnet, dass** das Gestell (6) zum Bewegen des Küchenblocks (2) in die Außenposition dazu ausgebildet ist, den Küchenblock (2) in Querrichtung aus dem Fahrzeug (100) und gleichzeitig in Hochrichtung nach unten zu bewegen,
• wobei das Gestell (6) zum Bewegen des Küchenblocks (2) in die Innenposition dazu ausgebildet ist, den Küchenblock (2) in Hochrichtung nach oben und gleichzeitig in Querrichtung in das Fahrzeug (100) zu bewegen,
• wobei die Verstellvorrichtung (10) einen Ausleger (11) und eine Führung (12) umfasst,
• wobei der Ausleger (11) um eine erste Drehachse (13) drehbar am zweiten Tagelement angeordnet ist,
• wobei der Ausleger (11) um eine zweite Drehachse (14) drehbar am Küchenblock (2) angeordnet ist,
• wobei die Führung (12) um eine dritte Drehachse (15) drehbar am zweiten Tagelement angeordnet ist,
• wobei die Führung (12) um eine vierte Drehachse (16) drehbar am Küchenblock (2) angeordnet ist,
• und wobei die vier Drehachsen versetzt zueinander sind und horizontal stehen.

2. Küchenanordnung (1) nach Anspruch 1, wobei das Gestell (6) ein erstes Tragelement (7) umfasst, das am Fahrzeug (100), vorzugsweise zumindest teilweise in einer Trittstufe (102) des Fahrzeugs (100), befestigbar ist.

3. Küchenanordnung (1) nach Anspruch 2, wobei das Drehlager (9) am ersten Tragelement (7) angeordnet ist..

4. Küchenanordnung (1) nach einem der vorhergehenden Ansprüche, wobei das zweite Tragelement (8) in Querrichtung längenverstellbar, vorzugsweise teleskopierbar, ist.

5. Küchenanordnung (1) nach einem der vorhergehenden Ansprüche, wobei die erste Drehachse (13) bei Innenposition des Küchenblocks (2) unter dem Küchenblock (2) angeordnet ist.

6. Küchenanordnung (1) nach einem der vorhergehenden Ansprüche, wobei der Küchenblock (2) mittels der Verstellvorrichtung (10) gleichzeitig in Querrichtung und in Hochrichtung bewegbar ist.

7. Küchenanordnung (1) nach einem der Ansprüche 1 bis 5, wobei der Küchenblock (2) mittels der Verstellvorrichtung (10) gleichzeitig in Längsrichtung und in Hochrichtung bewegbar ist.

8. Küchenanordnung (1) nach einem der vorhergehenden Ansprüche, wobei zwischen zweitem Tragelement (8) und Küchenblock (2) zumindest ein Energiespeicher (17), vorzugsweise eine Gasdruckfeder, angeordnet ist, wobei der Energiespeicher (17) beim Absenken des Küchenblocks (2) aufladbar und beim Anheben des Küchenblocks (2) entladbar ist.

9. Fahrzeug (100), insbesondere Reisemobil, umfassend eine Küchenanordnung (1) nach einem der Ansprüche 1 bis 8, wobei die Küchenanordnung (1) an einer Türöffnung (101), vorzugsweise einer seitlichen Türöffnung (101), des Fahrzeugs (100) angeordnet ist
• wobei die Küchenanordnung (1) einen Küchenblock (2) und ein im Fahrzeug (100) befestigtes Gestell (6) umfasst,
• wobei an der Küchenanordnung (1) jeweils zueinander senkrecht eine Längsachse (31), eine Querachse (32) und eine Hochachse (30) definiert sind,
• wobei der Küchenblock (2) über das Gestell (6) beweglich an dem Fahrzeug (100) befestigt ist,
• wobei das Gestell (6) zum Bewegen des Küchenblocks (2) zwischen einer Innenposition und einer Außenposition ausgebildet ist,
• wobei das Gestell (6) zum Bewegen des Küchenblocks (2) in die Außenposition dazu ausgebildet ist, den Küchenblock (2) in Querrichtung aus dem Fahrzeug (100) und in Hochrichtung nach unten zu bewegen,
• wobei das Gestell (6) zum Bewegen des Küchenblocks (2) in die Innenposition dazu ausgebildet ist, den Küchenblock (2) in Hochrichtung nach oben und in Querrichtung in das Fahrzeug (100) zu bewegen,
• wobei das Gestell (6) ein Drehlager (9) umfasst, sodass der Küchenblock (2) um eine zur Hochachse (30) parallele Schwenkachse (40) drehbar ist,
• wobei das Gestell (6) ein zweites Tragelement (8) umfasst, das über das Drehlager (9) um die Schwenkachse (40) drehbar ist,
• wobei der Küchenblock (2) über eine Verstellvorrichtung (10) am zweiten Tragelement (8) höhenverstellbar befestigt ist,
wobei der Küchenblock (2) zur Bewegung in die Außenposition 90° um eine zur Hochachse (30) parallele Schwenkachse (40) nach außen drehbar und daraufhin mittels der Verstellvorrichtung (10) gleichzeitig in Querrichtung vom Fahrzeug (100) weg und in Hochrichtung nach unten bewegbar ist.

10. Fahrzeug (100), insbesondere Reisemobil, umfassend eine Küchenanordnung (1) nach einem der Ansprüche 1 bis 8, wobei die Küchenanordnung (1) an einer Türöffnung (101), vorzugsweise einer seitlichen Türöffnung (101), des Fahrzeugs (100) angeordnet ist
• wobei die Küchenanordnung (1) einen Küchenblock (2) und ein im Fahrzeug (100) befestigtes Gestell (6) umfasst,
• wobei an der Küchenanordnung (1) jeweils zueinander senkrecht eine Längsachse (31), eine Querachse (32) und eine Hochachse (30) definiert sind,
• wobei der Küchenblock (2) über das Gestell (6) beweglich an dem Fahrzeug (100) befestigt ist,
• wobei das Gestell (6) zum Bewegen des Küchenblocks (2) zwischen einer Innenposition und einer Außenposition ausgebildet ist,
• wobei das Gestell (6) zum Bewegen des Küchenblocks (2) in die Außenposition dazu ausgebildet ist, den Küchenblock (2) in Querrichtung aus dem Fahrzeug (100) und in Hochrichtung nach unten zu bewegen,
• wobei das Gestell (6) zum Bewegen des Küchenblocks (2) in die Innenposition dazu ausgebildet ist, den Küchenblock (2) in Hochrichtung nach oben und in Querrichtung in das Fahrzeug (100) zu bewegen,
wobei der Küchenblock (2) von zwei gegenüberliegenden Seiten verwendbar ist, wobei der Küchenblock (2) zur Bewegung in die Außenposition über eine Verstellvorrichtung (10), ohne vorheriges Drehen des Küchenblocks (2), gleichzeitig in Querrichtung vom Fahrzeug (100) weg und in Hochrichtung nach unten bewegbar ist.

11. Fahrzeug (100) nach Anspruch 10,
• wobei das Gestell (6) ein Drehlager (9) umfasst, sodass der Küchenblock (2) um eine zur Hochachse (30) parallele Schwenkachse (40) drehbar ist,
• wobei das Gestell (6) ein zweites Tragelement (8) umfasst, das über das Drehlager (9) um die Schwenkachse (40) drehbar ist,
• wobei der Küchenblock (2) über die Verstellvorrichtung (10) am zweiten Tragelement (8) höhenverstellbar befestigt ist,
wobei der Küchenblock (2) zur Freigabe der Türöffnung (101) um eine zur Hochachse (30) parallele Schwenkachse (40) drehbar ist.

12. Fahrzeug (100), insbesondere Reisemobil, umfassend eine Küchenanordnung (1) nach einem der Ansprüche 1 bis 8, wobei die Küchenanordnung (1) an einer Türöffnung (101), vorzugsweise einer seitlichen Türöffnung (101), des Fahrzeugs (100) angeordnet ist
• wobei die Küchenanordnung (1) einen Küchenblock (2) und ein im Fahrzeug (100) befestigtes Gestell (6) umfasst,
• wobei an der Küchenanordnung (1) jeweils zueinander senkrecht eine Längsachse (31), eine Querachse (32) und eine Hochachse (30) definiert sind,
• wobei der Küchenblock (2) über das Gestell (6) beweglich an dem Fahrzeug (100) befestigt ist,
• wobei das Gestell (6) zum Bewegen des Küchenblocks (2) zwischen einer Innenposition und einer Außenposition ausgebildet ist,
• wobei das Gestell (6) zum Bewegen des Küchenblocks (2) in die Außenposition dazu ausgebildet ist, den Küchenblock (2) in Querrichtung aus dem Fahrzeug (100) und in Hochrichtung nach unten zu bewegen,
• wobei das Gestell (6) zum Bewegen des Küchenblocks (2) in die Innenposition dazu ausgebildet ist, den Küchenblock (2) in Hochrichtung nach oben und in Querrichtung in das Fahrzeug (100) zu bewegen,
• wobei das Gestell (6) ein Drehlager (9) umfasst, sodass der Küchenblock (2) um eine zur Hochachse (30) parallele Schwenkachse (40) drehbar ist,
• wobei das Gestell (6) ein zweites Tragelement (8) umfasst, das über das Drehlager (9) um die Schwenkachse (40) drehbar ist,
• wobei der Küchenblock (2) über eine Verstellvorrichtung (10) am zweiten Tragelement (8) höhenverstellbar befestigt ist,
wobei der Küchenblock (2) zur Bewegung in die Außenposition 180° um eine zur Hochachse (30) parallele Mittelachse (41) drehbar und daraufhin mittels der Verstellvorrichtung (10) gleichzeitig in Querrichtung vom Fahrzeug (100) weg und in Hochrichtung nach unten bewegbar ist.

13. Fahrzeug (100) nach Anspruch 12, wobei der Küchenblock (2) zur Freigabe der Türöffnung (101) um eine zur Hochachse (30) parallele Schwenkachse (40) drehbar ist.

## Claims

1. A kitchen arrangement (1) for a vehicle (100), comprising
- a kitchen block (2),
- and a frame (6), which is fixable in the vehicle (100),
- wherein a longitudinal axis (31), a transverse axis (32) and a vertical axis (30) are defined perpendicularly to each other at the kitchen arrangement (1),
- wherein the kitchen block (2) is movably attachable to the vehicle (100) via the frame (6),
- wherein the frame (6) is configured for moving the kitchen block (2) between an inner position and an outer position,
- wherein the frame (6) comprises a pivot bearing (9), so that the kitchen block (2) is rotatable about a pivoting axis (40) parallel to the vertical axis (30),
- wherein the frame (6) comprises a second supporting element (8), which is rotatable about the pivoting axis (40) via the pivoting bearing (9),
- wherein the kitchen block (2) is fixed to the second supporting element (8) in a height-adjustable manner via an adjustment device (10),
**characterized in that** the frame (6) for moving the kitchen block (2) into the outer position is configured to move the kitchen block (2) in the transverse direction out of the vehicle (100) and simultaneously downwards in the vertical direction,
- wherein the frame (6) for moving the kitchen block (2) into the inner position is configured to move the kitchen block (2) upwards in the vertical direction and simultaneously in the transverse direction into the vehicle (100),
- wherein the adjustment device (10) comprises an extension arm (11) and a guide (12),
- wherein the extension arm (11) is arranged rotatably about a first rotation axis (13) at the second supporting element,
- wherein the extension arm (11) is arranged rotatably about a second rotation axis (14) at the kitchen block (2),
- wherein the guide (12) is arranged rotatably about a third rotation axis (15) at the second supporting element,
- wherein the guide (12) is arranged rotatably about a fourth rotation axis (16) at the kitchen block (2),
- and wherein the four rotation axes are offset from one another and are horizontal.

2. The kitchen arrangement (1) according to claim 1, wherein the frame (6) comprises a first supporting element (7), which is fixable to the vehicle (100), preferably at least partially in a tread (102) of the vehicle (100).

3. The kitchen arrangement (1) according to claim 2, wherein the pivoting bearing (9) is arranged at the first supporting element (7).

4. The kitchen arrangement (1) according to any of preceding claims, wherein the second supporting element (8) is length-adjustable in the transverse direction, preferably telescopic.

5. The kitchen arrangement (1) according to any of preceding claims, wherein the first rotation axis (13) is arranged under the kitchen block (2) when the kitchen block (2) is in the inner position.

6. The kitchen arrangement (1) according to any of preceding claims, wherein the kitchen block (2) is simultaneously movable in the transverse direction and in the vertical direction via the adjustment device (10).

7. The kitchen arrangement (1) according to any of claims 1 to 5, wherein the kitchen block (2) is simultaneously movable in the longitudinal direction and in the vertical direction via the adjustment device (10).

8. The kitchen arrangement (1) according to any of preceding claims, wherein at least one energy accumulator (17), preferably a gas pressure spring, is arranged between the second supporting element (8) and the kitchen block (2), wherein the energy accumulator (17) is chargeable when the kitchen block (2) is lowered and is dischargeable when the kitchen block (2) is raised.

9. A vehicle (100), in particular motor home, comprising a kitchen arrangement (1) according to any of claims 1 to 8, wherein the kitchen arrangement (1) is arranged at a door opening (101), preferably a lateral door opening (101), of the vehicle (100),
- wherein the kitchen arrangement (1) comprises a kitchen block (2) and a frame (6) fixed in the vehicle (100),
- wherein a longitudinal axis (31), a transverse axis (32) and a vertical axis (30) are defined perpendicularly to each other at the kitchen arrangement (1),
- wherein the kitchen block (2) is movably fixed to the vehicle (100) via the frame (6),
- wherein the frame (6) is configured for moving the kitchen block (2) between an inner position and an outer position,
- wherein the frame (6) is configured for moving the kitchen block (2) into the outer position to move the kitchen block (2) in the transverse direction out of the vehicle (100) and downwards in the vertical direction,
- wherein the frame (6) for moving the kitchen block (2) into the inner position is configured to move the kitchen block (2) upwards in the vertical direction and into the vehicle (100) in the transverse direction,
- wherein the frame (6) comprises a pivoting bearing (9), so that the kitchen block (2) is rotatable about a pivoting axis (40) parallel to the vertical axis (30),
- wherein the frame (6) comprises a second supporting element (8), which is rotatable about the pivoting axis (40) via the pivoting bearing (9),
- wherein the kitchen block (2) is fixed in a height-adjustable manner at the second supporting element (8) via an adjustment device (10),
wherein the kitchen block (2) is rotatable outwards by 90° about a pivoting axis (40) parallel to the vertical axis (30) for moving into the outer position and thereupon is movable via the adjustment device (10) simultaneously in the transverse direction away from the vehicle (100) and downwards in the vertical direction.

10. A vehicle (100), in particular motor home, comprising a kitchen arrangement (1) according to any of claims 1 to 8, wherein the kitchen arrangement (1) is arranged at a door opening (101), preferably a lateral door opening (101), of the vehicle (100),
- wherein the kitchen arrangement (1) comprises a kitchen block (2) and a frame (6) fixed in the vehicle (100),
- wherein a longitudinal axis (31), a transverse axis (32) and a vertical axis (30) are defined perpendicularly to each other at the kitchen arrangement (1),
- wherein the kitchen block (2) is fixed movably to the vehicle (100) via the frame (6),
- wherein the frame (6) is configured for moving the kitchen block (2) between an inner position and an outer position,
- wherein the frame (6) is configured for moving the kitchen block (2) into the outer position to move the kitchen block (2) in the transverse direction out of the vehicle (100) and downwards in the vertical direction,
- wherein the frame (6) for moving the kitchen block (2) into the inner position is configured to move the kitchen block (2) upwards in the vertical direction and into the vehicle (100) in the transverse direction,
wherein the kitchen block (2) is useable at two opposite sides, wherein the kitchen block (2) for moving into the outer position via an adjustment device (10), without prior rotation of the kitchen block (2) is simultaneously movable in the transverse direction away from the vehicle (100) and downwards in the vertical direction .

11. The vehicle (100) according to claim 10,
- wherein the frame (6) comprises a pivoting bearing (9), so that the kitchen block (2) is rotatable about a pivoting axis (40) parallel to the vertical axis (30),
- wherein the frame (6) comprises a second supporting element (8), which is rotatable about the pivoting axis (40) via the pivoting bearing (9),
- wherein the kitchen block (2) is fixed in a height-adjustable manner at the second supporting element (8) via the adjustment device (10),
wherein the kitchen block (2) is rotatable about a pivoting axis (40) parallel to the vertical axis (30) to release the door opening (101).

12. A vehicle (100), in particular motor home, comprising a kitchen arrangement (1) according to any of claims 1 to 8, wherein the kitchen arrangement (1) is arranged at a door opening (101), preferably a lateral door opening (101), of the vehicle (100),
- wherein the kitchen arrangement (1) comprises a kitchen block (2) and a frame (6) fixed in the vehicle (100),
- wherein a longitudinal axis (31), a transverse axis (32) and a vertical axis (30) are defined perpendicularly to one another at the kitchen arrangement (1),
- wherein the kitchen block (2) is fixed movably to the vehicle (100) via the frame (6),
- wherein the frame (6) is configured for moving the kitchen block (2) between an inner position and an outer position,
- wherein the frame (6) for moving the kitchen block (2) into the outer position is configured to move the kitchen block (2) in the transverse direction out of the vehicle (100) and downwards in the vertical direction,
- wherein the frame (6) for moving the kitchen block (2) into the inner position is configured to move the kitchen block (2) upwards in the vertical direction and into the vehicle (100) in the transverse direction,
- wherein the frame (6) comprises a pivoting bearing (9), so that the kitchen block (2) is rotatable about a pivoting axis (40) parallel to the vertical axis (30),
- wherein the frame (6) comprises a second supporting element (8), which is rotatable about the pivoting axis (40) via the pivoting bearing (9),
- wherein the kitchen block (2) is fixed in a height-adjustable manner at the second supporting element (8) via an adjustment device (10),
wherein the kitchen block (2) for moving into the outer position is rotatable by 180° about a central axis (41) parallel to the vertical axis (30) and thereupon is simultaneously movable in the transverse direction away from the vehicle (100) and downwards in the vertical direction via the adjustment device (10).

13. The vehicle (100) according to claim 12, wherein the kitchen block (2) is rotatable about a pivoting axis (40) parallel to the vertical axis (30) to release the door opening (101).

## Revendications

1. Ensemble de cuisine (1) pour un véhicule (100), comprenant
- un bloc-cuisine (2),
- et un châssis (6) pouvant être fixé dans le véhicule (100),
- dans lequel un axe longitudinal (31), un axe transversal (32) et un axe vertical (30) sont définis respectivement de manière perpendiculaire les uns par rapport aux autres sur l'ensemble de cuisine (1),
- dans lequel le bloc-cuisine (2) peut être fixé de manière mobile sur le véhicule (100) par l'intermédiaire du châssis (6),
- dans lequel le châssis (6) est réalisé pour déplacer le bloc-cuisine (2) entre une position intérieure et une position extérieure,
- dans lequel le châssis (6) comprend un palier rotatif (9) si bien que le bloc-cuisine (2) peut tourner autour d'un axe de pivotement (40) parallèle par rapport à l'axe vertical (30),
- dans lequel le châssis (6) comprend un deuxième élément de support (8), qui peut tourner autour de l'axe de pivotement (40) par l'intermédiaire du palier rotatif (9),
- dans lequel le bloc-cuisine (2) est fixé de manière ajustable en hauteur sur le deuxième élément de support (8) par l'intermédiaire d'un dispositif d'ajustement (10),
**caractérisé en ce que** le châssis (6) destiné à déplacer le bloc-cuisine (2) dans la position extérieure est réalisé pour déplacer le bloc-cuisine (2) hors du véhicule (100) dans la direction transversale et simultanément vers le bas dans la direction verticale,
- dans lequel le châssis (6) destiné à déplacer le bloc-cuisine (2) dans la position intérieure est réalisé pour déplacer le bloc-cuisine (2) vers le haut dans la direction verticale et, simultanément, dans le véhicule (100) dans la direction transversale,
- dans lequel le dispositif d'ajustement (10) comprend un bras (11) et un guidage (12),
- dans lequel le bras (11) est disposé sur le deuxième élément de support de manière à pouvoir tourner autour d'un premier axe de rotation (13),
- dans lequel le bras (11) est disposé sur le bloc-cuisine (2) de manière à pouvoir tourner autour d'un deuxième axe de rotation (14),
- dans lequel le guidage (12) est disposé sur le deuxième élément de support de manière à pouvoir tourner autour d'un troisième axe de rotation (15),
- dans lequel le guidage (12) est disposé sur le bloc-cuisine (2) de manière à pouvoir tourner autour d'un quatrième axe de rotation (16),
- et dans lequel les quatre axes de rotation sont décalés les uns par rapport aux autres et sont à l'horizontale.

2. Ensemble de cuisine (1) selon la revendication 1, dans lequel le châssis (6) comprend un premier élément de support (7), qui peut être fixé sur le véhicule (100), de préférence au moins en partie sur une marche (102) du véhicule (100).

3. Ensemble de cuisine (1) selon la revendication 2, dans lequel le palier rotatif (9) est disposé sur le premier élément de support (7).

4. Ensemble de cuisine (1) selon l'une quelconque des revendications précédentes, dans lequel le deuxième élément de support (8) est ajustable en longueur, de préférence est télescopique, dans la direction transversale.

5. Ensemble de cuisine (1) selon l'une quelconque des revendications précédentes, dans lequel le premier axe de rotation (13) est disposé sous le bloc-cuisine (2) lorsque le bloc-cuisine (2) est en position intérieure.

6. Ensemble de cuisine (1) selon l'une quelconque des revendications précédentes, dans lequel le bloc-cuisine (2) peut être déplacé simultanément dans la direction transversale et dans la direction verticale au moyen du dispositif d'ajustement (10).

7. Ensemble de cuisine (1) selon l'une quelconque des revendications 1 à 5, dans lequel le bloc-cuisine (2) peut être déplacé simultanément dans la direction longitudinale et dans la direction verticale au moyen du dispositif d'ajustement (10).

8. Ensemble de cuisine (1) selon l'une quelconque des revendications précédentes, dans lequel au moins un accumulateur d'énergie (17), de préférence un ressort à pression de gaz, est disposé entre le deuxième élément de support (8) et le bloc-cuisine (2), dans lequel l'accumulateur d'énergie (17) peut être chargé lors de l'abaissement du bloc-cuisine (2) et peut être déchargé lors du relèvement du bloc-cuisine (2).

9. Véhicule (100), en particulier camping-car, comprenant un ensemble de cuisine (1) selon l'une quelconque des revendications 1 à 8, dans lequel l'ensemble de cuisine (1) est disposé sur une ouverture de porte (101), de préférence une ouverture de porte (101) latérale, du véhicule (100),
- dans lequel l'ensemble de cuisine (1) comprend un bloc-cuisine (2) et un châssis (6) fixé dans le véhicule (100),
- dans lequel un axe longitudinal (31), un axe transversal (32) et un axe vertical (30) sont définis respectivement de manière perpendiculaire les uns par rapport aux autres sur l'ensemble de cuisine (1),
- dans lequel le bloc-cuisine (2) est fixé de manière mobile sur le véhicule (100) par l'intermédiaire du châssis (6),
- dans lequel le châssis (6) est réalisé pour déplacer le bloc-cuisine (2) entre une position intérieure et une position extérieure,
- dans lequel le châssis (6) destiné à déplacer le bloc-cuisine (2) dans la position extérieure est réalisé pour déplacer le bloc-cuisine (2) hors du véhicule (100) dans la direction transversale et vers le bas dans la direction verticale,
- dans lequel le châssis (6) destiné à déplacer le bloc-cuisine (2) dans la position intérieure est réalisé pour déplacer le bloc-cuisine (2) vers le haut dans la direction verticale et dans le véhicule (100) dans la direction transversale,
- dans lequel le châssis (6) comprend un palier rotatif (9) si bien que le bloc-cuisine (2) peut tourner autour d'un axe de pivotement (40) parallèle par rapport à l'axe vertical (30),
- dans lequel le châssis (6) comprend un deuxième élément de support (8), qui peut tourner autour de l'axe de pivotement (40) par l'intermédiaire du palier rotatif (9),
- dans lequel le bloc-cuisine (2) est fixé de manière ajustable en hauteur sur le deuxième élément de support (8) par l'intermédiaire d'un dispositif d'ajustement (10),
dans lequel le bloc-cuisine (2) peut être tourné vers l'extérieur de 90° autour d'un axe de pivotement (40) parallèle par rapport à l'axe vertical (30) pour le déplacement dans la position extérieure puis peut être déplacé simultanément de manière à s'éloigner du véhicule (100) dans la direction transversale et vers le bas dans la direction verticale au moyen du dispositif d'ajustement (10).

10. Véhicule (100), en particulier camping-car, comprenant un ensemble de cuisine (1) selon l'une quelconque des revendications 1 à 8, dans lequel l'ensemble de cuisine (1) est disposé sur une ouverture de porte (101), de préférence une ouverture de porte (101) latérale, du véhicule (100),
- dans lequel l'ensemble de cuisine (1) comprend un bloc-cuisine (2) et un châssis (6) fixé dans le véhicule (100),
- dans lequel un axe longitudinal (31), un axe transversal (32) et un axe vertical (30) sont définis respectivement de manière perpendiculaire les uns par rapport aux autres sur l'ensemble de cuisine (1),
- dans lequel le bloc-cuisine (2) est fixé de manière mobile sur le véhicule (100) par l'intermédiaire du châssis (6),
- dans lequel le châssis (6) est réalisé pour déplacer le bloc-cuisine (2) entre une position intérieure et une position extérieure,
- dans lequel le châssis (6) destiné à déplacer le bloc-cuisine (2) dans la position extérieure est réalisé pour déplacer le bloc-cuisine (2) hors du véhicule (100) dans la direction transversale et vers le bas dans la direction verticale,
- dans lequel le châssis (6) destiné à déplacer le bloc-cuisine (2) dans la position intérieure est réalisé pour déplacer le bloc-cuisine (2) vers le haut dans la direction verticale et dans le véhicule (100) dans la direction transversale,
dans lequel le bloc-cuisine (2) peut être utilisé depuis deux côtés se faisant face, dans lequel le bloc-cuisine (2) peut être déplacé simultanément de manière à s'éloigner du véhicule (100) dans la direction transversale et vers le bas dans la direction verticale, sans rotation préalable du bloc-cuisine (2) par l'intermédiaire d'un dispositif d'ajustement (10) pour le déplacement dans la position extérieure.

11. Véhicule (100) selon la revendication 10,
- dans lequel le châssis (6) comprend un palier rotatif (9) si bien que le bloc-cuisine (2) peut tourner autour d'un axe de pivotement (40) parallèle par rapport à l'axe vertical (30),
- dans lequel le châssis (6) comprend un deuxième élément de support (8), qui peut tourner autour de l'axe de pivotement (40) par l'intermédiaire du palier rotatif (9),
- dans lequel le bloc-cuisine (2) est fixé de manière ajustable en hauteur sur le deuxième élément de support (8) par l'intermédiaire du dispositif d'ajustement (10),
dans lequel le bloc-cuisine (2) peut tourner autour d'un axe de pivotement (40) parallèle par rapport à l'axe vertical (30) pour dégager l'ouverture de porte (101).

12. Véhicule (100), en particulier camping-car, comprenant un ensemble de cuisine (1) selon l'une quelconque des revendications 1 à 8, dans lequel l'ensemble de cuisine (1) est disposé sur une ouverture de porte (101), de préférence une ouverture de porte (101) latérale, du véhicule (100),
- dans lequel l'ensemble de cuisine (1) comprend un bloc-cuisine (2) et un châssis (6) fixé dans le véhicule (100),
- dans lequel un axe longitudinal (31), un axe transversal (32) et un axe vertical (30) sont définis respectivement de manière perpendiculaire les uns par rapport aux autres sur l'ensemble de cuisine (1),
- dans lequel le bloc-cuisine (2) est fixé de manière mobile sur le véhicule (100) par l'intermédiaire du châssis (6),
- dans lequel le châssis (6) est réalisé pour déplacer le bloc-cuisine (2) entre une position intérieure et une position extérieure,
- dans lequel le châssis (6) destiné à déplacer le bloc-cuisine (2) dans la position extérieure est réalisé pour déplacer le bloc-cuisine (2) hors du véhicule (100) dans la direction transversale et vers le bas dans la direction verticale,
- dans lequel le châssis (6) destiné à déplacer le bloc-cuisine (2) dans la position intérieure est réalisé pour déplacer le bloc-cuisine (2) vers le haut dans la direction verticale et dans le véhicule (100) dans la direction transversale,
- dans lequel le châssis (6) comprend un palier rotatif (9) si bien que le bloc-cuisine (2) peut tourner autour d'un axe de pivotement (40) parallèle par rapport à l'axe vertical (30),
- dans lequel le châssis (6) comprend un deuxième élément de support (8), qui peut tourner autour de l'axe de pivotement (40) par l'intermédiaire du palier rotatif (9),
- dans lequel le bloc-cuisine (2) est fixé de manière ajustable en hauteur sur le deuxième élément de support (8) par l'intermédiaire d'un dispositif d'ajustement (10),
dans lequel le bloc-cuisine (2) peut tourner de 180° autour d'un axe central (41) parallèle par rapport à l'axe vertical (30) pour le déplacement dans la position extérieure puis peut être déplacé simultanément de manière à s'éloigner du véhicule (100) dans la direction transversale et vers le bas dans la direction verticale au moyen du dispositif d'ajustement (10).

13. Véhicule (100) selon la revendication 12, dans lequel le bloc-cuisine (2) peut tourner autour d'un axe de pivotement (40) parallèle par rapport à l'axe vertical (30) pour dégager l'ouverture de porte (101).
